# EUROPEAN PATENT APPLICATION

(11) **EP 3 076 560 A1**
(43) Date of publication of application: **05.10.2016**
(21) Application number: 15162111.7
(22) Date of filing: 31.03.2015
(51) Int. Cl.: H04B 3/32

(54) **VECTORING ON DIGITAL SUBSCRIBER LINES**

(71) Applicant: BRITISH TELECOMMUNICATIONS public limited company, London EC1A 7AJ (GB)
(72) Inventor: The designation of the inventor has not yet been filed
(74) Representative: Tuckett, William John

(57) **Abstract**

This invention aims to ensure that a VDSL line gains or remain at the same speed when vectored. For a given line in a vectored group or joining a vectored group, an estimate is made of its channel capacity without vectoring enabled, and an estimate is made of its channel capacity with vectoring enabled. If the estimated channel capacity of the line with vectoring enabled is lower than without vectoring enabled, then the vectoring coefficients representing the impact of the other lines into that line are zeroed. In effect, vectoring is turned off for that line, but remains active for other lines including the effect of that line into the other lines. The invention is particularly useful for lines with metallic issues or other faults, which could lose speed when vectored due as a result of inaccuracies in the crosstalk channel matrix used in the vectoring process.

## Description

### Field of the Invention

This invention relates to a method of managing crosstalk cancellation on digital subscriber lines in a telecommunications network.

### Background to the Invention

Digital subscriber line (DSL) technology, often referred to as "broadband", is a family of services that provides high speed digital data transmission that makes use of metallic twisted copper pairs that form part of a local telephone network. DSL is commonly used to provide a customer's home with a network connection, typically to the Internet via an Internet Service Provider (ISP).

There are various types of DSL technologies, which include SDSL (symmetric digital subscriber line), ADSL (asymmetric digital subscriber line), and VDSL (very high bit rate digital subscriber line). In the UK, VDSL is increasingly used to provide high speed services to customers. However, the data rate attainable with VDSL, and indeed all DSL technologies, is affected by attenuation and noise interference on the line.

Attenuation is a function of the length of the line (i.e. the copper pair), with longer lines attenuating more. Attenuation is also a function of the frequency of the signal being transmitted, with higher frequencies being attenuated more. Consequently, VDSL systems, which utilise higher frequency spectrum, do not operate well on lines much longer than about 1.5km.

Noise interference on a line reduces the signal to noise ratio on a line, which in turn reduces the amount of data that can be carried on the line. Sources of noise interference (electrical interference) include faulty power supply units, microwave ovens, street lights, domestic lighting, units etc. However, noise interference can also arise from neighbouring lines in the form of crosstalk.

Crosstalk is the electromagnetic coupling of signals between neighbouring lines. Typically lines are arranged in cable bundles, or binder groups, comprising up to several hundred lines. The electric and magnetic fields created by signals on one line induce currents in neighbouring lines, leading to undesired crosstalk signals on those other lines. Crosstalk can be categorised into two types - near end crosstalk (NEXT) and far end crosstalk (FEXT). NEXT is the type of crosstalk that occurs from signals travelling in opposite directions on two lines (or from a transmitter into a "near-end" receiver). FEXT is the type of crosstalk that results from signals travelling in the same direction on two lines (or from a transmitter into a "far end" receiver). Self-crosstalk (self-NEXT and self-FEXT) refers to crosstalk from the same type of service, such as crosstalk in a VDSL2 service from another VDSL2 service in the same cable bundle.

In VDSL systems, FEXT is the dominant source of interference, especially on shorter lines. In contrast, NEXT is not a significant problem in VDSL systems, where separate frequency bands are used for upstream and downstream transmission.

A technique called self-FEXT cancellation can be used to reduce self-FEXT interference in VDSL2 systems. Self-FEXT cancellation is also more commonly referred to as vectoring. Vectoring is set out in ITU-T G.993.5 Recommendation "Self-FEXT Cancellation (Vectoring) for use with VDSL2 transceivers". Vectoring works by measuring crosstalk coupling into each VDSL2 line in a bundle, which in turn is used to calculate and generate "anti-noise" at the DSLAM to null the crosstalk in each line. The calculations are computationally highly intensive, as each line can interfere with every other line, and the generated anti-noise on a line will also cause interference on other lines that will need cancellation. Nonetheless, when properly applied, the reduction in self-FEXT can be considerable, and VDSL2 data rates in excess of 100Mbs achievable on shorter loops. However, for vectoring to realise meaningful gains, all the lines in a bundle need to be vectored (referred to as a "vectored group"). Lines in a bundle that are not part of the vectored group but carrying the same technology (VDSL2) generate what is often referred to as "alien crosstalk", and can significantly reduce the effectiveness of vectoring for many of the lines in a vectored group.

### Summary of the Invention

It is the aim of aspects of the present invention to provide an improved method of managing vectoring on digital subscriber lines.

According to one aspect of the present invention, there is provided a method of managing crosstalk cancellation in a network comprising a plurality of digital subscriber lines, said method comprising:
generating a crosstalk channel matrix;
estimating a first channel capacity associated with a selected digital subscriber line without crosstalk cancellation enabled;
estimating a second channel capacity associated with the selected digital subscriber line with crosstalk cancellation enabled;
comparing the first channel capacity with the second channel capacity; and
adjusting the crosstalk channel matrix for the selected digital subscriber line in dependence on the result of the comparison.

If the first channel capacity is less than the second channel capacity, then preferably setting to zero the crosstalk coefficients in the crosstalk channel matrix representing the effect of the other digital subscriber lines on the selected digital subscriber line.

The method may further comprise using the adjusted crosstalk channel matrix to apply crosstalk cancellation to the plurality of digital subscriber lines.

According to a second aspect of the present invention, there is provided a device for managing crosstalk cancellation in a network comprising a plurality of digital subscriber lines, said device comprising a processor adapted to:
generate a crosstalk channel matrix;
estimate a first channel capacity associated with a selected digital subscriber line without crosstalk cancellation enabled;
estimate a second channel capacity associated with the selected digital subscriber line with crosstalk cancellation enabled;
compare the first channel capacity with the second channel capacity; and
adjust the crosstalk channel matrix for the selected digital subscriber line in dependence on the result of the comparison.

### Brief Description of the Drawings

For a better understanding of the present invention reference will now be made by way of example only to the accompanying drawings, in which:
Figure 1 is a system diagram of a part of a telecommunications network;
Figure 2 is a functional diagram of a DSLAM in an example of the present invention;
Figure 3 is an example of a crosstalk channel matrix;
Figure 4 is a flow chart summarising the steps of an example of the present invention.

### Description of Preferred Embodiments

The present invention is described herein with reference to particular examples. The invention is not, however, limited to such examples.

This invention aims to ensure that ensure that a VDSL line gains or remains at the same speed when vectored. For a given line in a vectored group or joining a vectored group, an estimate is made of its channel capacity without vectoring enabled, and an estimate is made of its channel capacity with vectoring enabled. If the estimated channel capacity of the line with vectoring enabled is lower than without vectoring enabled, then the vectoring coefficients representing the impact of the other lines into that line are zeroed. In effect, vectoring is turned off for that line, but remains active for other lines including the effect of that line into the other lines. The invention is particularly useful for lines with metallic issues or other faults, which could lose speed when vectored as a result of inaccuracies in the crosstalk channel matrix used in the vectoring process.

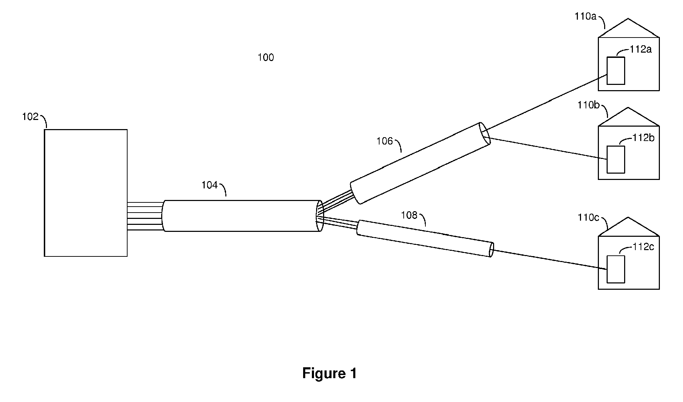

Figure 1 illustrates a telecommunications network 100, which includes a digital subscriber line access multiplexer (DSLAM) 102, and several customer premises 110a, 110b and 110c. The DSLAM 102 is a network element that provides digital subscriber line (DSL) services to connected lines and associated customer premises. In this example, the DSLAM provides VDSL2 (Very-high-bit-rate digital subscriber line 2) services, though other DSL services could also be provided to some or all of the lines. In this VDSL2 arrangement, the DSLAM 102 is located in a roadside cabinet or other node located close to the customer premises. As such, VDSL2 systems are often referred to as fibre-to-the-cabinet (FTTC). Optical fibre cabling connects the DSLAM to a telephone exchange providing the backhaul. Connection between the DSLAM and each of the customer premises is via a respective telephone line comprised of a metallic (usually copper or aluminium) twisted pair of wires, often simply referred to as "pair". Within each of the customer premises is respective customer premises equipment CPE, 112a, 112b and 112c, which is usually a VDSL2 modem or VDSL2 enabled home gateway device, to which a respective line is connected.

The DSLAM 102 can service multiple lines. In this example, only 3 lines have been shown to the customer premises 110a, 110b, and 110c for simplicity. However, in practice, hundreds of lines can be serviced by the DSLAM 102. The lines are clustered into groups called "bundles" or "binders" within cables. In the example in Figure 1, the lines coming out of the DSLAM are shown clustered in a first bundle 104, containing 100 lines. This bundle is then split towards the CPEs into further bundles, with two shown here for simplicity, 106 and 108. Bundle 106 contains 20 lines, including the lines to CPE 112a and 112b, and bundle 108 contains 30 lines, including the line to CPE 112c. The splits between each bundle can occur anywhere along the path, from the wiring cabinet to the distribution point, and even at customers' master sockets. Crosstalk will occur between these lines, due to their proximity to each other as a result of physically being bound in the same binder.

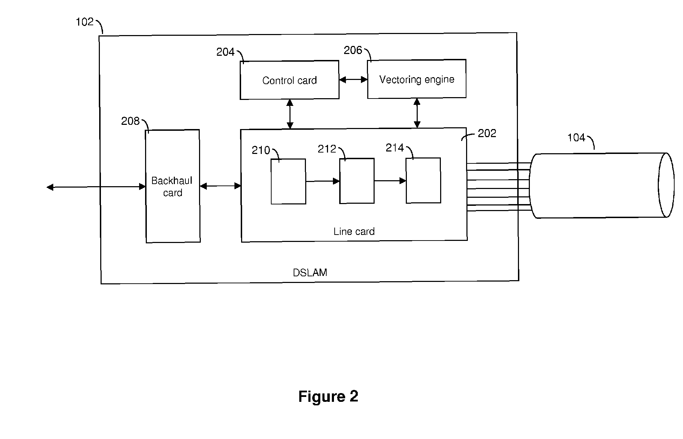

Figure 2 is a simplified functional diagram of the DSLAM 102. The DSLAM 102 includes a line card 202, a control card 204, a vectoring engine 206, and a backhaul card 208. The line card is connected to multiple lines, such as the lines connecting to the CPEs 112a, 112b and 112c.

In the line card 202, a VDSL transceiver unit at the optical unit (VTU-O) circuit provides VDSL2 services to each of the lines of the connected CPEs. The VTU-O comprises a symbol encoder 210, a pre-coder module 212, and an output modulator 214. Data for transmission over a given line is received via the backhaul card 208, and is first processed by the symbol encoder 210. The output from the symbol encoder 210 is usually modulated by an output modulator 214 into a signal carried over the metallic pair associated with the respective line to the CPE. In the present system, vectoring is enabled according to ITU-T G.993.5 Recommendation "Self-FEXT Cancellation (Vectoring) for use with VDSL2 transceivers", and thus there is an additional pre-coder module 212 that resides between the output of the symbol encoder 210 and the input of the output modulator 214. At each CPE, there is an equivalent unit to the VTU-O, called the VTU-R (receiver), which handles data transmissions from the CPE to the DSLAM. The operation of the line card, and thus the VTU-O and VTU-R, are controlled by a DSL chip on the line card.

The VTU-O has access to the transmit signals for all lines in the vector group. The vectored group is made up of a plurality of lines across which vectoring is to be applied. During initialisation, the VTU-O uses a predetermined sequence of constellation values for a pilot signal. The sequence is also known to the VTU-R. The pilot signal is transmitted on each line by superimposing onto SYNC symbols. The pilot signal on each line is arranged to be orthogonal to those on other lines. The VTU-R measures the actual received signal, and estimates an error vector representing the error in the received pilot signal compared to the expected pilot signal. This error vector is sent back by the VTU-R to the VTU-O. This is repeated for each line in the vectored group. By performing a cross-correlation between the received error vectors and the transmitted pilot signals for each line in the vector group, the vectoring engine 206 at the VTU-O can estimate the phase and magnitude of the crosstalk coupling between any transmitter (line) and any receiver (line) in the vectored group. This coupling is represented as a crosstalk channel matrix with associated crosstalk coefficients representing the crosstalk impact of each line on every other line.

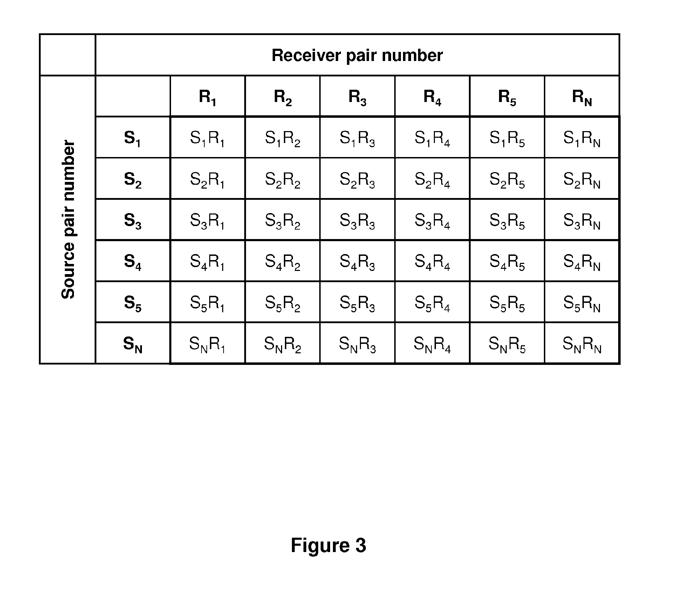

Figure 3 shows an example of a crosstalk channel matrix 300. The matrix 300 comprises rows labelled S₁ through to S_{N}, representing the source lines or lines acting as sources of crosstalk (sometimes referred to as "disturbers"), and where N is the total number of lines in the vectored group. The columns of the matrix are labelled R₁ through to R_{N}, and represent the receiver lines or lines that are suffering from crosstalk (sometimes referred to as "victims"), and also where N is the total number of lines in the vectored group. The elements of the matrix S₁ R₁ through to S_{N}R_{N} are the crosstalk coefficients, each of which represents the crosstalk effect of a particular source line on a particular receiver line. For example, S₁ R₃ is the crosstalk coefficient for line 1 on line 3.

In practice, there will be a matrix 300 for each of the frequency bands/tones across which the VDSL lines operate, as the crosstalk will be different across each band.

The vectoring engine 206 uses the resulting crosstalk channel matrix to adjust the pre-coder 212. Effectively, the vectoring engine 206 adds an anti-noise signal based on the inverse of the crosstalk coefficients for each line (receiver R in the matrix 300).

Whilst only one line card is shown here, the DSLAM will typically house multiple line cards, each of which can be configured to provide VDSL2 as well as other DSL services such as ADSL2+ via lines to connected CPEs. However, any line not running in G993.5 "vectored" mode is excluded from the vectoring process.

The control card 204 co-ordinates the configuration of all the cards installed in the DSLAM and provides an interface for the network operator to control and monitor the DSLAM operation. The vectoring engine 206 is responsible for handling crosstalk calculations, determining crosstalk coefficients, and controlling vectoring at the VTU-O.

The backhaul card 208, which typically also includes a Layer-2 switch, acts as an Ethernet aggregator for the data to/from the ISPs connected to the network and the VDSL2 transmission channels.

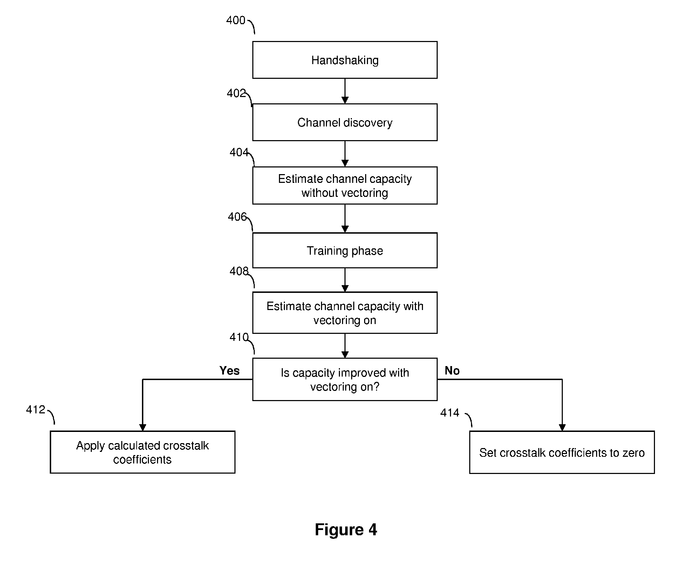

An example of the invention will now be described with reference to the flow chart in Figure 4.

In this example, there is a vectored group comprising a mix of lines in SHOWTIME (which refers to when a line is synchronised and ready for data transmission), and lines initialising. The invention is applied to one of the initialising lines, hereinafter referred to as the joining line, though can apply equally to further initialising lines by repeating the method in turn to each further line.

In step 400, a period of initialisation starts with a handshaking phase. During handshaking, the most basic capabilities are exchanged between the VTU-O and the VTU-R for the joining line, including a line code, operating mode and essential operating parameters. Assuming a compatible set of capabilities exist, the process moves from handshake to channel discovery in step 402.

In step 402, a channel discovery phase starts. In this example, the joining line is to be added to the vectored group. For the joining line, the VTU-O initially does not transmit any signal on the line for a period of time, during which VTU-R at the CPE measures the quiet line noise in the downstream channel for the joining line. Similarly, the VTU-R also does not transmit any signal for a period of time, during which the VTU-O measures the quiet line noise in the upstream channel for the joining line. This allows the noise in the downstream and upstream channels to be determined for the joining line.

Then, the VTU-O transmits what is referred to as an O-P-VECTOR 1 signal, which comprises only sync symbols and quiet symbols, modulated by the predetermined pilot sequence, on each of the downstream carriers/tones that are being used by the joining line. The VTU-R measures the actual received signal, and estimates an error vector representing error in the received signal compare to the pilot signal. This error sample is fed back by the VTU-R to the VTU-O on a back channel, and used by the vectoring engine 206 to calculate the crosstalk coefficient matrix 300, as described earlier.

Furthermore, the path loss and signal-to-noise ratio (SNR) on each downstream carrier is also estimated for the joining line. The transmit signal from the VTU-O is known, and specified in the G.993.2 specification. Therefore, the VTU-R can estimate path loss as the averaged ratio of transmit signal to receive signal for each tone. Specifically, the SNR for each tone for the joining line can be estimated based on the standard deviation of the received QAM constellation values calculated. This calculation is performed by the DSL chip in the line card of the VTU-R. The estimated SNR for each tone is communicated back to the VTU-O from the VTU-R on a back channel.

As this stage, vectoring has yet to be enabled with respect to the joining line, so there is no crosstalk cancellation in operation in respect of the joining line. The crosstalk pre-coder signal used for vectoring is initially disabled for the joining line. When the signal is disabled, there is no self-FEXT cancellation into that line.

Step 402 can be repeated for the upstream channel to obtain a crosstalk coefficient matrix 300 for the upstream channels, as well as the SNR per tone for the upstream channels.

In step 404, the channel capacity without vectoring enabled is estimated for the joining line by the DSL chip on the line card 202. Starting with the downstream channel, the line card 202 uses the estimated SNR from step 402 to calculate the downstream channel capacity without vectoring on. This calculation is done using the measured SNR for each tone to determine the number of bits that can be carried per tone using known bit loading techniques. Then the number of bits can be summed across all the tones to give the total number of bits, or channel capacity, that can be supported on the downstream channel without vectoring.

In step 406, a training phase starts where the vectoring engine 206 enables vectoring on the joining line by injecting pre-coder crosstalk cancellation signals onto the line based on the result of step 402 and specifically the crosstalk channel matrix 300. As described above, the vectoring engine 206 uses the calculated crosstalk coefficients to control the pre-coder 212 to inject pre-coder crosstalk cancellation signals onto each line. Referring to Figure 3, each of the columns represents a receiver line and the associated crosstalk coefficients, each representing the crosstalk effect of a source lines on that receiver line. Thus, each column of the matrix 300 is used to determine the pre-coder crosstalk cancellation signals.

With vectoring enabled on all lines, the VTU-O transmits (as in step 402), signals comprising only sync symbols and quiet symbols, modulated by the predetermined pilot sequence, on each of the downstream carriers/tones that are being used by the joining line. As the transmit signal from the VTU-O is known, and specified in the G.993.2 specification, the VTU-R can estimate path loss as the averaged ratio of transmit signal to receive signal for each tone. Specifically, the SNR for each tone for the joining line can be estimated based on the standard deviation of the received QAM constellation values calculated. This calculation is performed by the DSL chip in the line card of the VTU-R. The estimated SNR for each tone is communicated back to the VTU-O from the VTU-R on a back channel.

In step 408, the channel capacity with vectoring enabled is estimated for the joining line by the DSL chip on the line card 202. This calculation is done using the estimated SNR for each tone from step 406 to determine the number of bits that can be carried per tone using known bit loading techniques. Then the number of bits can be summed across all the tones to give the total number of bits, or channel capacity, that can be supported on the downstream channel with vectoring.

In step 410, the vectoring engine 206 compares the estimated channel capacity for the joining line when vectoring is not enabled from step 404 with the channel capacity for the joining line when vectoring is enabled from step 408. If the estimated channel capacity for the selected line with vectoring enabled is better than, or is at least the same as, the estimated channel capacity without vectoring enabled, then processing passes to step 412, where vectoring is effectively enabled for the joining line. If the estimated channel capacity for the joining line with vectoring enabled is worse than the estimated channel capacity without vectoring enabled, then processing passes to step 414, where vectoring is effectively disabled for the joining line.

Specifically, in step 412, the crosstalk channel matrix 300 calculated in step 402 is used for all lines, including the joining line, by the pre-coder 212. Thus, vectoring operates as set out in ITU-T G.993.5 for all lines.

However, in step 414, the crosstalk channel coefficients for all source lines into the joining line are zeroed. Referring to the matrix 300 in Figure 3, this zeroing will be to all coefficients in the column associated with the joining line. So, for example, if the joining line is represented by R₄ in matrix, then matrix S₁R4 through to S_{N}R₄ are zeroed. The other coefficients remain unchanged. The resulting crosstalk channel matrix is used by the pre-coder in the usual manner for vectoring. The effect is that vectoring is effectively switched off for the joining line, but remains active for other lines including the effect of the joining line into the other lines.

Using the method, joining lines are not forced to operate with vectoring applied to it if the capacity of that line with vectoring applied to it is less than when the line operates without vectoring. This can occur if the joining line is suffering from a fault for example, when noise and interference can interfere with the determination of the crosstalk coupling coefficients.

Whilst the above example has been described largely with reference to the VTU-O at the DSLAM, the method can equally be applied at the VTU-R at the CPE for managing crosstalk vectoring in upstream channels.

In a further example of the invention, if step 414 is triggered, the joining line may also be flagged as a potentially faulty line. Such lines can be analysed further to determine if a fault exists,

Exemplary embodiments of the invention are realised, at least in part, by executable computer program code which may be embodied in an application program data. When such computer program code is loaded into the memory of the DSL chip or vectoring engine 206, it provides a computer program code structure which is capable of performing at least part of the methods in accordance with the above described exemplary embodiments of the invention.

A person skilled in the art will appreciate that the computer program structure referred can correspond to the flow chart shown in Figure 4, where each step of the flow charts can correspond to at least one line of computer program code and that such, in combination with the processor in the DSL chip or vectoring engine 206, provides apparatus for effecting the described process.

In general, it is noted herein that while the above describes examples of the invention, there are several variations and modifications which may be made to the described examples without departing from the scope of the present invention as defined in the appended claims. One skilled in the art will recognise modifications to the described examples.

## Claims

1. A method of managing crosstalk cancellation in a network comprising a plurality of digital subscriber lines, said method comprising:
a) generating a crosstalk channel matrix;
b) estimating a first channel capacity associated with a selected digital subscriber line without crosstalk cancellation enabled;
c) estimating a second channel capacity associated with the selected digital subscriber line with crosstalk cancellation enabled;
d) comparing the first channel capacity with the second channel capacity; and
e) adjusting the crosstalk channel matrix for the selected digital subscriber line in dependence on the result of the comparison.

2. A method according to claim 1, wherein if the first channel capacity is less than the second channel capacity, then setting to zero the crosstalk coefficients in the crosstalk channel matrix representing the effect of the other digital subscriber lines on the selected digital subscriber line.

3. A method according to claim 1 or 2, further comprising using the adjusted crosstalk channel matrix to apply crosstalk cancellation to the plurality of digital subscriber lines.

4. A non-transitory computer readable medium having stored thereon a program or suite of programs executable by a processor to perform the method of any of claims 1 to 3.

5. A device for managing crosstalk cancellation in a network comprising a plurality of digital subscriber lines, said device comprising a processor adapted to:
generate a crosstalk channel matrix;
estimate a first channel capacity associated with a selected digital subscriber line without crosstalk cancellation enabled;
estimate a second channel capacity associated with the selected digital subscriber line with crosstalk cancellation enabled;
compare the first channel capacity with the second channel capacity; and
adjust the crosstalk channel matrix for the selected digital subscriber line in dependence on the result of the comparison.
